# EUROPÄISCHE PATENTSCHRIFT

(11) **EP 4 031 765 B1**
(45) Veröffentlichungstag und Bekanntmachung des Hinweises auf die Patenterteilung: **13.09.2023**
(21) Anmeldenummer: 20765210.8
(22) Anmeldetag: 18.08.2020
(51) Int. Cl.: F03D 80/50, F16B 19/02, F16B 2/12

(54) **FIXIERMITTEL FÜR SCHWERE GETRIEBETEILE**
FASTENING MEANS FOR HEAVY TRANSMISSION PARTS
MOYEN DE FIXATION POUR PIÈCES LOURDES DE TRANSMISSION

(30) Priorität: 17.09.2019 DE 102019214094
(43) Veröffentlichungstag der Anmeldung: 27.07.2022
(73) Patentinhaber: ZF Friedrichshafen AG, 88046 Friedrichshafen (DE); ZF Wind Power Antwerpen NV, 3920 Lommel (BE)
(72) Erfinder: DE LAET, Wim, 2000 Antwerpen (BE); AERTS, Jan, 88046 Friedrichshafen (DE); CEYSSENS, Dominiek, 88046 Friedrichshafen (DE)
(74) Vertreter: ZF Friedrichshafen AG
(86) Internationale Anmeldenummer: PCT/EP2020/073037
(87) Internationale Veröffentlichungsnummer: WO 2021/052698

(56) Entgegenhaltungen:
- EP-A1- 3 499 055
- DE-A1-102009 008 607
- DE-A1-102014 201 465
- DE-U1-202005 013 328
- US-A1- 2013 178 326

## Beschreibung

Die Erfindung betrifft ein Fixiermittel nach dem Oberbegriff von Anspruch 1, ein Verfahren zum Fixieren eines Getriebeteils und ein Verfahren zum Lösen des Getriebeteils.

Ein Fixiermittel für ein Getriebeteil ist aus DE 10 2009 008607 A1 bekannt.

Zur Montage und Demontage großer Getriebe, etwa von Windkraftgetrieben, kann es erforderlich sein, einzelne Komponenten temporär zu fixieren. Dazu gibt es spezielle Fixiermittel. Diese werden durch das Getriebegehäuse eingeschraubt und halten die zu fixierende Komponente. Aufgrund der hohen Massen besteht die Gefahr, dass sich die Fixiermittel verformen. Ist die Verformung zu stark, verklemmen die Fixiermittel und lassen sich nicht mehr entfernen.

Der Erfindung liegt die Aufgabe zugrunde, Getriebeteile zur Montage oder Demontage unter Umgehung der den aus dem Stand der Technik bekannten Lösungen innewohnenden Nachteile zu fixieren. Insbesondere sollen sich die Fixiermittel auch im Falle einer plastischen Verformung entfernen lassen.

Diese Aufgabe wird gelöst durch ein Fixiermittel für ein Getriebeteil, beispielsweise einen Planetenträger, nach Anspruch 1 und ein Verfahren nach den unabhängigen Verfahrensansprüchen. Bevorzugte Weiterbildungen ergeben sich aus den Unteransprüchen und den in den Figuren dargestellten Ausführungsbeispielen.

Ein bevorzugt einstückiges Stück des Fixiermittels - Grundkörper genannt - weist mindestens ein Außengewinde und mindestens ein Durchgangsloch auf. Das Außengewinde dient zum Einschrauben in ein Gewindeloch einer gehäusefesten Struktur, etwa in das Getriebegehäuse selbst.

Ein Durchgangsloch ist ein Loch mit genau zwei Mündungen. Insbesondere kann es sich um eine Bohrung handeln. Eine Bohrung ist ein Durchgangsloch mit durchgängig kreisförmigem Querschnitt.

Erfindungsgemäß weist das Fixiermittel einen ersten Bolzen und einen zweiten Bolzen auf. Der erste Bolzen lässt sich in einen ersten Bereich des ersten Durchgangslochs einstecken. Befindet sich der erste Bolzen in dem ersten Bereich des Durchgangslochs, ist er dort verschiebbar. Die Verschiebung erfolgt entlang einer Längsachse des Durchgangslochs. Handelt es sich bei dem Durchgangsloch um eine Bohrung, ist die Längsachse identisch mit einer Mittelachse der Bohrung, das heißt, einer Achse, um welche die Bohrung rotationssymmetrisch ist.

Der zweite Bolzen weist ein Außengewinde auf. In einem zweiten Bereich des Durchgangslochs befindet sich ein zu dem Außengewinde des zweiten Bolzens korrespondierendes Innengewinde. Das Außengewinde des zweiten Bolzens ist mit dem Innengewinde des zweiten Bereichs des Durchgangslochs verschraubbar. Dies bedeutet, dass der zweite Bolzen in den zweiten Teil des Durchgangslochs einschraubbar ist.

Der erste Bereich des Durchgangslochs und ein Bereich, den der zweite Bolzen beim Einschrauben in das Durchgangsloch überstreicht, überschneiden sich. Dies bedeutet, dass die Verschiebbarkeit des ersten Bolzens eingeschränkt wird, je weiter man den zweiten Bolzen in das Durchgangsloch einschraubt. Beim Einschrauben des zweiten Bolzens wird der erste Bolzen wenigstens teilweise von dem zweiten Bolzen verdrängt und aus dem Durchgangsloch herausgedrückt. Auf diese Weise kommt eine Fixierung des zu fixierenden Getriebeteils zustande.

Der zweite Bolzen weist ein vorzugsweise als Bohrung ausgestaltetes Durchgangsloch auf. Ein Innengewinde des ersten Bolzens fluchtet mit dem Durchgangsloch. Dies bedeutet, dass das Durchgangsloch und das Innengewinde entlang gerader Linien ausgerichtet sind. Die Linien verlaufen parallel zu den Mittelachsen des Innengewindes und des Durchgangslochs. Jede Linie verläuft in mehreren Punkten jeweils durch eine Mantelfläche des Durchgangslochs und das Innengewinde.

Handelt es sich bei dem Durchgangsloch um eine Bohrung, ist die Flucht mit dem Innengewinde gleichbedeutend damit, dass die folgenden drei Bedingungen erfüllt sind:
1. Das Durchgangsloch und das Innengewinde sind koaxial zueinander ausgerichtet;
2. ein Außendurchmesser des Innengewindes ist mindestens so groß wie ein Durchmesser des Durchgangslochs; und
3. das Durchgangsloch und das Innengewinde sind gegenüberliegend angeordnet.

Bei einer koaxialen Ausrichtung des Durchgangslochs und des Innengewindes sind die Mittelachsen des Durchgangslochs und des Innengewindes identisch. Das Durchgangsloch und das Innengewinde sind gegenüberliegend ausgerichtet, wenn zwischen einer Mündung des Durchgangslochs und einer Mündung des Innengewindes ausschließlich ein Luftspalt verläuft, oder wenn die beiden Mündungen aufeinander aufliegen.

Die erfindungsgemäße Anordnung ermöglicht es, eine Schraube, etwa eine Bolzenschraube, durch das Durchgangsloch hindurchzuführen und in das Innengewinde einzuschrauben. Der Bolzen bildet dann ein Widerlager für den Kopf der Schraube, wobei das Kinn des Kopfs auf dem Rand einer Mündung des Durchgangslochs aufliegt. Wird nun die Schraube in das Innengewinde eingeschraubt, verspannt sie sich zwischen dem ersten Bolzen und dem zweiten Bolzen bzw. zwischen dem Innengewinde und dem Rand der Mündung. Der erste Bolzen wird dadurch in das Durchgangsloch hineingezogen. Durch die Kraft, welche die Schraube infolge der Verspannung auf den ersten Bolzen aufbringt, lässt sich der erste Bolzen auch dann noch bewegen, wenn er sich durch plastische Verformung in dem ersten Teil des Durchgangslochs verklemmt hat.

In einer bevorzugten Weiterbildung weist der erste Bolzen eine längs, das heißt entlang der identischen Mittelachsen des ersten Bolzens, des zweiten Bolzens, des Durchgangslochs des Grundkörpers, des Innengewindes des ersten Grundkörpers und des Durchgangslochs des zweiten Grundkörpers, verlaufende Nut auf. Eine Nut ist eine längliche Vertiefung einer Oberfläche. Sie zeichnet sich gegenüber anderen Vertiefungen der Oberfläche durch einen entlang des Verlaufs der Nut unveränderlichen Querschnitt aus. Der Querschnitt ist also gegenüber einer orthogonal zu einer den Verlauf der Nut beschreibenden Kurve ausgerichteten Schnittebene invariant. Vorliegend handelt es sich bei der genannten Kurve um eine Gerade, die parallel zu den genannten Mittelachsen verläuft.

Weiterbildungsgemäß greift ein Teil des Grundkörpers in die Nut ein. Dadurch wird verhindert, dass sich der erste Bolzen dreht, wenn eine Schraube in sein Innengewinde eingeschraubt wird. Der längliche Verlauf der Nut erlaubt eine Verschiebung des ersten Bolzens in dem ersten Bereich des Durchgangslochs. Bevorzugt weist der Grundkörper eine Schraube auf, die den genannten Teil des Grundkörpers bildet, die also in die Nut eingreift.

Alternativ kann der Grundkörper die Nut aufweisen, wobei ein Teil des ersten Bolzens in die Nut eingreift.

Ein erfindungsgemäßes Verfahren dient dazu, unter Verwendung des erfindungsgemäßen Fixiermittels oder einer bevorzugten Weiterbildung ein Getriebeteil, etwa einen Planetenträger, zu fixieren. Das Verfahren wird in folgenden Schritten ausgeführt:
- Einsetzen des ersten Bolzens in den ersten Teil des Durchgangslochs des Grundkörpers;
- Einschrauben des Außengewindes des Grundkörpers in ein Innengewinde einer gehäusefesten Struktur des Getriebes, etwa in das Gehäuse selbst; und
- Verspannen des ersten Bolzens gegen den Getriebeteil durch Einschrauben des Außengewindes des zweiten Bolzens in das Innengewinde des Grundkörpers und Verspannen des zweiten Bolzens gegen den ersten Bolzen.

Durch das Verspannen des zweiten Bolzens gegen den ersten Bolzen wird der erste Bolzen aus dem Durchgangsloch des Grundkörpers herausgedrückt und gegen den Getriebeteil verspannt. Kommt es dabei zu einer plastischen Verformung, sodass der erste Bolzen klemmt, lässt sich die Fixierung des Getriebeteils unter Anwendung eines weiteren erfindungsgemäßen Verfahrens lösen. Dieses Verfahren umfasst die folgenden Schritte:
- Positionieren des zweiten Bolzens derart, dass der erste Bolzen und der zweite Bolzen voneinander beabstandet sind;
- Durchführen einer Schraube durch das Durchgangsloch des zweiten Bolzens; und
- Einschrauben der Schraube in das Innengewinde des ersten Bolzens.

Die Positionierung des zweiten Bolzens erfolgt, indem der zweite Bolzen mit seinem Außengewinde in dem Innengewinde des Grundkörpers verdreht wird. Dadurch lässt sich der Abstand des zweiten Bolzens von dem ersten Bolzen variieren. Die Schraube wird durch Einschrauben in das Innengewinde des ersten Bolzens, wie oben beschrieben, verspannt, sodass die Verklemmung des ersten Bolzens gelöst und der erste Bolzen zurück in das Durchgangsloch des Grundkörpers gezogen wird.

Bevorzugte Ausführungsbeispiele der Erfindung sind in den Figuren dargestellt. Übereinstimmende Bezugsziffern kennzeichnen dabei gleiche oder funktionsgleiche Merkmale. Im Einzelnen zeigt:
- Fig. 1: eine erste Variante eines Fixiermittels; und
- Fig. 2: eine zweite Variante eines Fixiermittels.

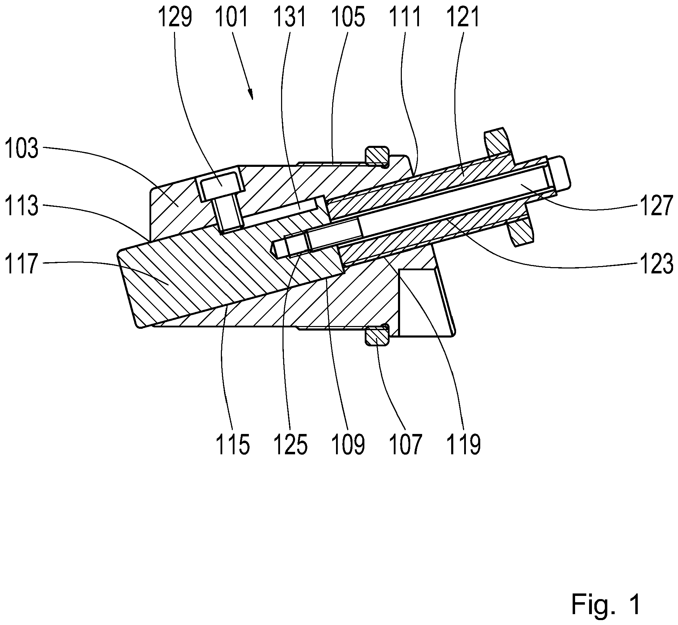

Das in Fig. 1 dargestellte Fixiermittel 101 weist einen Grundkörper 103 mit einem Außengewinde 105 auf. Das Außengewinde 105 dient dazu, das Fixiermittel 101 in ein korrespondierendes Innengewinde eines Getriebegehäuses einzuschrauben. Das Innengewinde des Getriebegehäuses ist als Durchgangsgewinde ausgestaltet, sodass das Fixiermittel 101 von außen eingesetzt werden kann. Eine Gegenmutter 107 auf dem Außengewinde 105 dient dazu, den Grundkörper 103 gegen Verdrehen zu sichern.

Der Grundkörper 103 ist mit einem Durchgangsloch 109 versehen. Ist der Grundkörper 103 in das Getriebegehäuse eingeschraubt, befindet sich eine erste Mündung 111 des Durchgangslochs 109 außerhalb des Gehäuses und eine zweite Mündung 113 innerhalb.

In einem ersten Bereich 115 des Durchgangslochs 109 ist ein erster Bolzen 117 angeordnet. Der erste Bolzen 117 ist entlang einer Mittelachse des Durchgangslochs 109 verschiebbar.

Ein zweiter Bereich 119 des Durchgangslochs 109 weist ein Innengewinde auf. In das Innengewinde ist ein zweiter Bolzen 121 mit einem korrespondierenden Außengewinde eingeschraubt.

Die erste Mündung 111 des Durchgangslochs 109 ist zugleich Mündung des Innengewindes des zweiten Bereichs 119. Durch die erste Mündung 111 hindurch wird der zweite Bolzen 121 in das Innengewinde eingeführt und verschraubt. Dadurch bewegt er sich in Richtung der zweiten Mündung 113 und dringt schließlich in den ersten Bereich 115 der Durchgangsbohrung 109 ein. Entsprechend wird der erste Bolzen 117 durch den zweiten Bolzen 121 verdrängt und aus der zweiten Mündung 113 heraus in das Getriebeinnere hineingedrückt. Indem der erste Bolzen 117 durch Einschrauben des zweiten Bolzens 121 gegen ein Getriebeteil verspannt wird, erfolgt eine Fixierung des Getriebeteils.

Der zweite Bolzen 121 weist ein längs verlaufendes Durchgangsloch 123 auf. Dieses fluchtet mit einem Innengewinde 125 des ersten Bolzens 117. Dadurch lässt sich eine Bolzenschraube 127 durch das Durchgangsloch 123 des zweiten Bolzens 121 hindurchführen und in das Innengewinde 125 einschrauben. Mit der Schraube 127 lässt sich eine eventuelle Verklemmung des ersten Bolzens 117 aufheben und der erste Bolzen 117 in seine Ausgangsposition zurückziehen.

Eine Schraube 129, die in dem Grundkörper 103 eingeschraubt ist und in eine Nut 131 des ersten Bolzens 117 eingreift, verhindert dabei, dass sich der erste Bolzen 117 dreht.

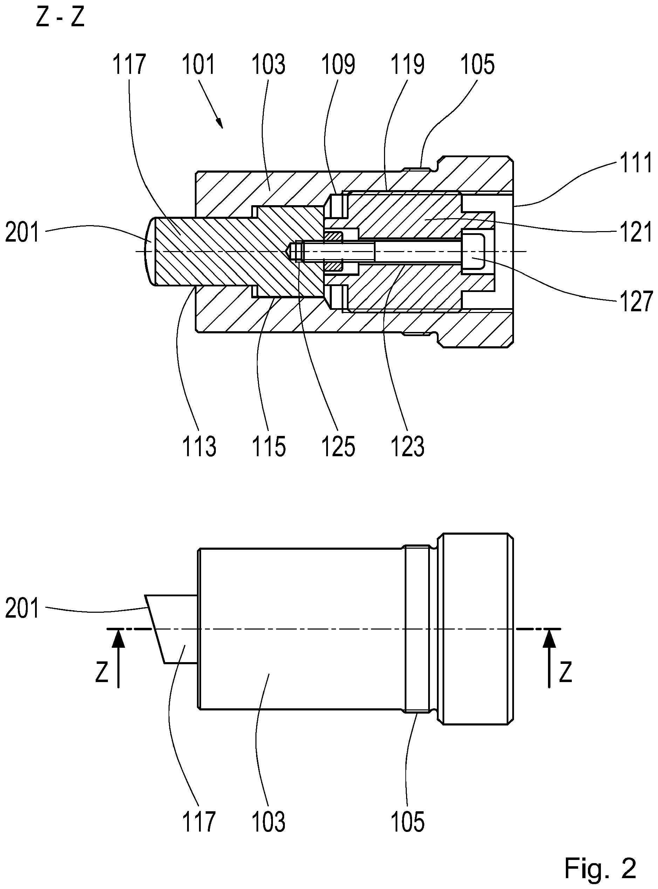

Bei dem in Fig. 1 dargestellten Fixiermittel 101 verlaufen eine Mittelachse des ersten Bolzens 117 und des zweiten Bolzens 121 und eine Mittelachse des Außengewindes 105 des Grundkörpers 103 antiparallel zueinander. Eine Variante mit parallelem Verlauf der Mittelachsen ist in Fig. 2 dargestellt. Der erste Bolzen 117 weist hier zudem eine abgeschrägte Stirnfläche 201 auf. Dies dient einerseits der besseren Fixierung eines zu fixierenden Getriebeteils, vergrößert andererseits aber auch die Gefahr einer Verklemmung des ersten Bolzens 117.

### Bezugszeichen

- 101: Fixiermittel
- 103: Grundkörper
- 105: Außengewinde
- 107: Gegenmutter
- 109: Durchgangsloch
- 111: erste Mündung
- 113: zweite Mündung
- 115: erster Bereich
- 117: erster Bolzen
- 119: zweiter Bereich
- 121: zweiter Bolzen
- 123: Durchgangsloch
- 125: Innengewinde
- 127: Bolzenschraube
- 129: Schraube
- 131: Nut
- 201: Stirnfläche

## Patentansprüche

1. Fixiermittel (101) für ein Getriebeteil, wobei das Fixiermittel einen Grundkörper (103) aufweist, wobei der Grundkörper (103) mindestens ein Außengewinde (105) und mindestens ein Durchgangsloch (109) aufweist; wobei das Fixiermittel
einen in einem ersten Bereich (115) des Durchgangslochs (109) verschiebbaren ersten Bolzen (117) und einen zweiten Bolzen (121) mit einem Außengewinde aufweist; wobei
ein zweiter Bereich (119) des Durchgangslochs (109) mindestens ein mit dem Außengewinde des zweiten Bolzens (121) verschraubbares Innengewinde aufweist;
und wobei
der zweite Bolzen (121) ein Durchgangsloch und der erste Bolzen (117) ein mit dem Durchgangsloch fluchtendes Innengewinde (125) aufweisen.

2. Fixiermittel (101) nach Anspruch 1; **dadurch gekennzeichnet, dass** der erste Bolzen (117) mindestens eine längs verlaufende Nut (131) aufweist; wobei ein Teil (129) des Grundkörpers (103) in die Nut (131) eingreift.

3. Verfahren zum Fixieren eines Getriebeteils unter Verwendung eines Fixiermittels (101) nach einem der vorhergehenden Ansprüche; mit den Schritten:
- Einsetzen des ersten Bolzens (117) in den ersten Bereich (115) des Durchgangslochs (109) des Grundkörpers (103);
- Einschrauben des Außengewinde (105) des Grundkörpers (103) in ein Innengewinde einer gehäusefesten Struktur des Getriebes; und
- Verspannen des ersten Bolzens (117) gegen den Getriebeteil durch Einschrauben des Außengewindes des zweiten Bolzens (121) in das Innengewinde des Grundkörpers (103) und Verspannen des zweiten Bolzens (121) gegen den ersten Bolzen (117).

4. Verfahren zum Lösen einer gemäß dem vorhergehenden Anspruch hergestellten Fixierung; mit den Schritten
- Positionieren des zweiten Bolzens (121) derart, dass der erste Bolzen (117) und der zweite Bolzen (121) voneinander beabstandet sind;
- Durchführen einer Schraube (127) durch das Durchgangsloch des zweiten Bolzens (121), und
- Einschrauben in das Innengewinde (125) des ersten Bolzens (117).

## Claims

1. Fastening means (101) for a transmission part, the fastening means having a main body (103),
wherein the main body (103) has at least one external thread (105) and at least one through hole (109);
wherein the fastening means has a first bolt (117) that can be displaced in a first region (115) of the through hole (109) and a second bolt (121) with an external thread;
wherein a second region (119) of the through hole (109) has at least one internal thread that can be screwed to the external thread of the second bolt (121); and
wherein the second bolt (121) has a through hole and the first bolt (117) has an internal thread (125) aligning with the through hole.

2. Fastening means (101) according to Claim 1, **characterized in that** the first bolt (117) has at least one longitudinally extending groove (131), part (129) of the main body (103) engaging in the groove (131).

3. Method for fastening a transmission part by using a fastening means (101) according to one of the preceding claims; having the steps:
- inserting the first bolt (117) into the first region (115) of the through hole (109) in the main body (103);
- screwing the external thread (105) of the main body (103) into an internal thread of a structure of the transmission that is fixed to the housing; and
- bracing the first bolt (117) against the transmission part by screwing the external thread of the second bolt (121) into the internal thread of the main body (103) and bracing the second bolt (121) against the first bolt (117) .

4. Method for loosening a fastening produced according to the preceding claim; having the steps
- positioning the second bolt (121) in such a way that the first bolt (117) and the second bolt (121) are spaced apart from each other;
- leading a screw (127) through the through hole in the second bolt (121), and
- screwing it into the internal thread (125) of the first bolt (117).

## Revendications

1. Moyen de fixation (101) pour une partie de transmission, le moyen de fixation présentant un corps de base (103),
le corps de base (103) présentant au moins un filetage extérieur (105) et au moins un trou traversant (109) ; le moyen de fixation présentant un premier boulon (117) pouvant coulisser dans une première zone (115) du trou traversant (109) et un deuxième boulon (121) avec un filetage extérieur ;
une deuxième zone (119) du trou traversant (109) présentant au moins un filetage intérieur pouvant être vissé avec le filetage extérieur du deuxième boulon (121) ; et
le deuxième boulon (121) présentant un trou traversant et le premier boulon (117) présentant un filetage intérieur (125) aligné avec le trou traversant.

2. Moyen de fixation (101) selon la revendication 1 ; **caractérisé en ce que** le premier boulon (117) présente au moins une rainure s'étendant longitudinalement (131) ; une partie (129) du corps de base (103) pénétrant dans la rainure (131).

3. Procédé de fixation d'une partie de transmission en utilisant un moyen de fixation (101) selon l'une quelconque des revendications précédentes, avec les étapes suivantes :
- l'insertion du premier boulon (117) dans la première zone (115) du trou traversant (109) du corps de base (103) ;
- le vissage du filetage extérieur (105) du corps de base (103) dans un filetage intérieur d'une structure solidaire du boîtier de la transmission ; et
- le serrage du premier boulon (117) contre la partie de transmission en vissant le filetage extérieur du deuxième boulon (121) dans le filetage intérieur du corps de base (103) et en serrant le deuxième boulon (121) contre le premier boulon (117).

4. Procédé de desserrage d'une fixation réalisée selon la revendication précédente, avec les étapes suivantes :
- le positionnement du deuxième boulon (121) de telle sorte que le premier boulon (117) et le deuxième boulon (121) sont espacés l'un de l'autre ;
- le passage d'une vis (127) à travers le trou traversant du deuxième boulon (121), et
- le vissage dans le filetage intérieur (125) du premier boulon (117).
